# EUROPÄISCHE PATENTSCHRIFT

(11) **EP 1 061 296 B1**
(45) Veröffentlichungstag und Bekanntmachung des Hinweises auf die Patenterteilung: **11.05.2005**
(21) Anmeldenummer: 00107811.2
(22) Anmeldetag: 12.04.2000
(51) Int. Cl.: F16J 15/34, F02F 11/00

(54) **Dichtung für die Lagerung eines Wellenzapfens**
Sealing for a shaft end support
Joint d'étanchéité pour support de l'extrêmité d'un arbre

(30) Priorität: 17.06.1999 DE 19927707
(43) Veröffentlichungstag der Anmeldung: 20.12.2000
(73) Patentinhaber: Carl Freudenberg KG, 69469 Weinheim (DE)
(72) Erfinder: Joly, Philippe, 52200 Langres (FR)

(56) Entgegenhaltungen:
- DE-A- 3 526 731
- DE-C- 951 325
- DE-C- 958 257
- US-A- 2 481 430

## Beschreibung

### Technisches Gebiet

Für die Abdichtung der Lagerung von Antriebswellen, insbesondere von Kurbelwellen von Verbrennungsmotoren, ist eine Vielzahl von Ausführungsformen bekannt. Neben der Lagerung der Welle im Wellengehäuse ist die Abdichtung des Wellendurchlasses in der Gehäusewand von beachtlicher Bedeutung. Zum einen soll der Schmierstoffaustritt aus dem Wellengehäuse verhindert werden. Zum anderen sollen Fremdstoffe von außen nicht in das Gehäuse eindringen können. Ein weiteres die Lagerung der Welle und die Abdichtung des Gehäuses betreffende Problem sind die axialen Abmessungen von Lagerung und Dichtung. Sehr häufig wird aus Platzgründen eine gedrungene Bauweise des Gehäuses angestrebt und jede Einsparung an Platz als vorteilhaft angesehen.

### Stand der Technik

Aus der DE AS 25 51 403 ist der prinzipielle Aufbau einer Wellenlagerung mit Dichtung zu entnehmen. Dort wird die Welle von einem Paßlager gehalten und das Wellenende gegenüber der Gehäusewand abgedichtet. Die Dichtung ist als Radialdichtung ausgebildet. Neben der Radialdichtung wird zwischen dem am Kurbelwellenende befestigten Schwungrad und der Gehäusewandung eine zusätzliche axiale Dichtung eingefügt. Der Gesamtaufbau einer solchen Dichtung aus Radial- und Axialdichtung am Wellenende ist beträchtlich.

Bekannt ist es auch, siehe US-A-2 481430, bei einer Wellenlagerung in einer Gehäusewand die Welle mit einer Ringschulter zu versehen, die ihrerseits mit einem ringförmigen Absatz in der Gehäusebohrung zusammen wirkt. Über einen Befestigungsring wird an dem Absatz eine Dichtung befestigt, die mit einem konvex ausgebildetedn Ringansatz von einer Fingerfeder an die Ringschulter der Welle gedrückt wird. Eine solche Dichtung ist sehr arbeits- und kostenintensiv.

### Darstellung der Erfindung

Der Erfindung liegt die Aufgabe zugrunde, die Dichtung so auszubilden, daß sie einfach in ihrem Aufbau ist und eine Reduktion der axialen Maschinenlänge erreicht wird. Dabei soll eine möglichst kostensparende Lösung gefunden werden, die trotzdem eine gute Abdichtung ergibt.

Die Lösung der gestellten Aufgabe wird bei einer Dichtung für die Lagerung eines Wellenzapfens in einer Gehäusewand erfindungsgemäß durch Anspruch 1 erreicht. Die Dichtung besteht aus einer Ringscheibe aus Dichtungsmaterial , die von einer Tellerfeder an die Stirnfläche des Wellenzapfens gedrückt wird, wobei die ringscheibe, die Tellerfeder und deren Halterung über eine Polymerdichtung miteinander verbunden sind. Dieses ergibt eine äußerst einfache und platzsparende Konstruktion. Das Wellenende wird in der Gehäusewand gelagert und der durch das Lager zwischen Gehäusewand und Wellenende entstehende Ringspalt kann in etwa von der Dichtung überdeckt werden.

Als Dichtungsmaterial für die Ringscheibe wird PTFE (Polytetrafluorethylen) benutzt. Dieses Material hat eine hohe Beständigkeit im Hinblick auf erhöhte Temperaturen und Verschleiß. Es ist außerdem platzsparend. Da seine Elastizität begrenzt ist, wird es über die Tellerfeder an die Dichtflächen angepreßt. Das Wellenzapfenende kann mit einem Laufring versehen sein, an dem die Dichtscheibe anliegt.

In weiterer Ausgestaltung der Erfindung wird die Ringscheibe auf ihrer Dichtfläche mit einer spiralig verlaufenden Oberflächenprofilierung versehen, durch welche eine Rückförderung von Schmierstoff- bzw. Lecköl erfolgt.

Zusätzlich zur Abdichtung an der Welle ist eine weitere statische Ringdichtung vorgesehen, die an der Stirnfläche der Gehäusewand fest anliegt und die gleichzeitig als Halterung für die Tellerfeder dienen kann. Als bevorzugte Ausführungsform, die besonders einfach in ihrem Aufbau ist, wird eine Ringdichtung aus einer metallenen Halterung mit einer anvulkanisierten Polymerdichtung vorgesehen. Die Ringscheibe, Tellerfeder und Halterung können über diese Polymerdichtung miteinander verbunden sein. Schließlich kann die Halterung und die Tellerfeder aus ein und demselben Material als einheitliches Bauteil ausgestaltet werden.

In Fortführung des Erfindungsgedankens wird das Wellenzapfenende als Lagerring für die Wellenlagerung ausgebildet. Hierdurch wird eine äußerst kompakte Ausführung des Wellenzapfenendes mit Lagerung und Gehäusewandung erreicht. Im Wellenzapfenende sind Sackgewindebohrungen für die Befestigungsschrauben des Drehkörpers vorgesehen, die dann radial innerhalb des Lagerrings liegen.

Zur Unterstützung der kompakten Bauweise wird schließlich der am Wellenzapfenende befestigte Drehkörper auf seiner Innenseite plan ausgebildet und die Stirnflächen von Wellenzapfen und Gehäusewand plan zueinander ausgerichtet.

### Kurzbeschreibung

In der beigefügten Zeichnung wird die Erfindung näher erläutert.
Es zeigt:
- Figur 1: den prinzipiellen Aufbau von Wellenlagerung und Dichtung,
- Figur 2: den Aufbau einer Dichtung im Schnitt und
- Figur 3: einen anderen Dichtungsaufbau, ebenfalls im Schnitt.

### Ausführung der Erfindung

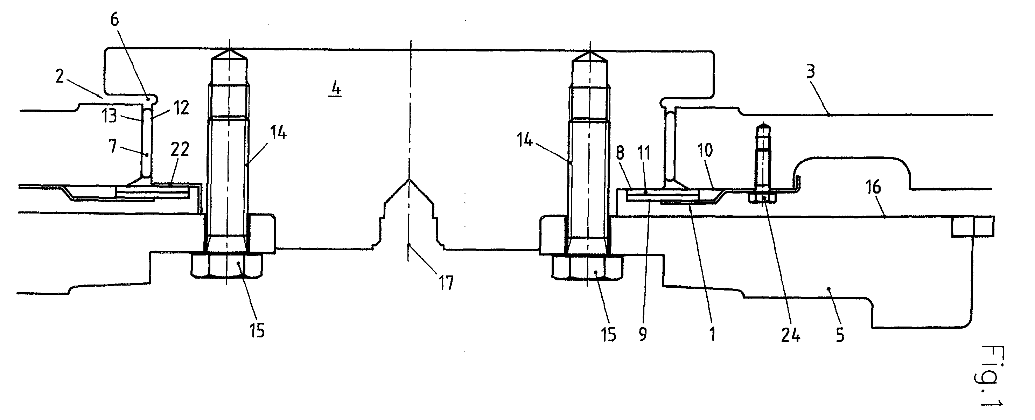

In der Figur 1 ist im Schnitt der prinzipielle Aufbau der Dichtung 1 mit Wellenlagerung 2 gezeigt. In der feststehenden Gehäusewand 3 wird das Wellenzapfenende 4 gehalten. Als Lager 7 ist ein Nadellager vorgesehen. Die Peripherie 12 des Wellenzapfenendes 4 bildet den inneren Lagerring für die Wellenlagerung 2. Die Innenfläche 13 der Öffnung in der Gehäusewand 3 bildet den äußeren Lagerring.

Das Wellenende 4 ist mit den Sackbohrungen 14 versehen, welche die Befestigungsschrauben 15 für den Drehkörper 5 aufnehmen. Der Drehkörper 5 ist üblicherweise ein Schwungrad. Auf seiner Innenseite 16 ist der Drehkörper 5 plan ausgebildet.

In den zwischen den Lagerringen 12 und 13 entstandenen Ringspalt ist das Lager 7, im vorliegenden Fall ein Nadellager, eingefügt. Die Stirnfläche 11 wird von der aus Dichtungsmaterial bestehenden Ringscheibe 8 teilweise überdeckt. Die Ringscheibe 8 wird von der Tellerfeder 9 gehalten und dabei an die Stirnfläche 11 des Wellenzapfens 4 gedrückt.

Die Welle rotiert um die Achse 17 und ist, wie der Zeichnung entnommen werden kann, als Kurbelwelle ausgebildet. Auf der oberen Hälfte der Figur liegt die Ringsscheibe 8 direkt an der Stirnfläche 11 des Wellenzapfens 4 an. In der unteren Hälfte der Figur ist ein Laufring 22 am Wellenzapfen 4 angebracht, der die Funktion als Dichtfläche übernimmt. Laufring 22 und Ringscheibe 8 sind nach Werkstoff und Oberflächenprofil so ausgewählt und gestaltet, daß sich eine vorteilhafte kleine Reibungszahl einstellt. Die Anpreßkraft der Ringscheibe ist axial ausgerichtet. Die Tellerfeder 9 ist an einer Halterung so befestigt und über Schrauben 24 am Gehäuse 3 angeschraubt.

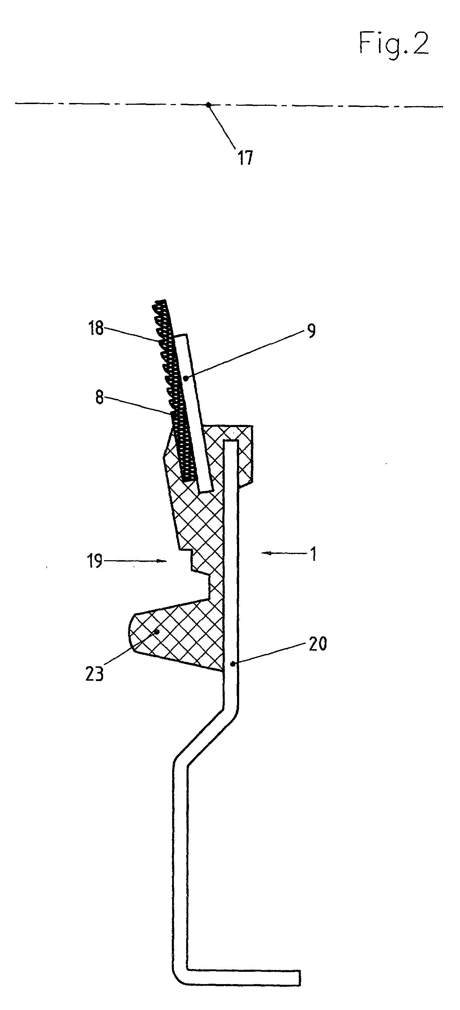

In der Figur 2 ist die in Figur 1 eingesetzte Dichtung 1 vergrößert dargestellt. Die Ringscheibe 8 besteht aus PTFE und ist auf ihrer Dichtfläche 18 mit einer spiralig verlaufenden Oberflächenprofilierung zur Rückförderung von Lecköl versehen. Die Profilierung ist durch die in der Figur eingezeichneten Sägezähne auf der Dichtfläche 18 angezeigt. Unmittelbar hinter der Scheibe 8 liegt die Tellerfeder 9. Beide sind von einer Ringdichtung 19 gehalten, die aus einem Polymermaterial 23 gebildet ist und einen metallenen Verstärkungsring als Halterung 20 aufweist. Ringscheibe 8, Tellerfeder 9 und Halterung 20 werden von der aus Polymermaterial 23 bestehenden Ringdichtung 19 zu einer Einheit miteinander verbunden.

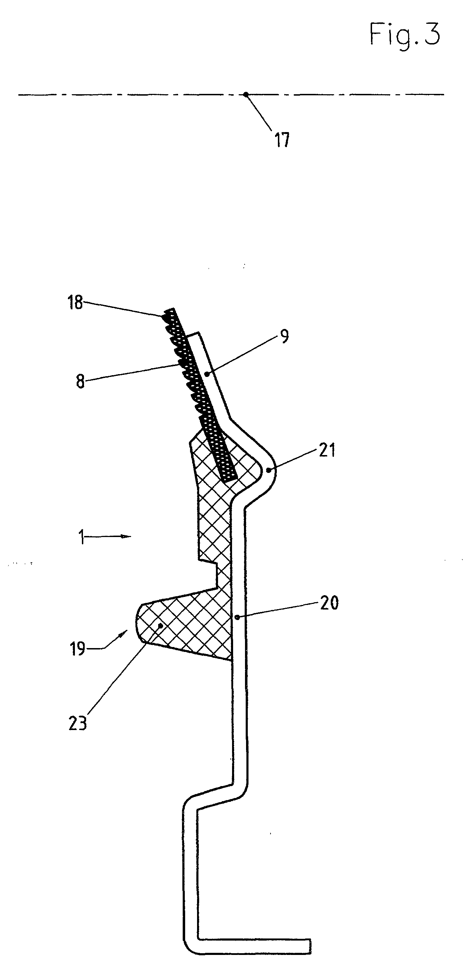

In der Figur 3 ist eine weitere Ausführungsform der Dichtung 1 dargestellt, bei der die Halterung 20 und die Tellerfeder 9 zu einem einheitlichen Bauteil zusammengefaßt sind. Die Verbindungsstelle 21 zwischen Bauteil 20 und Tellerfeder 9 ist als Wulst ausgebildet, um die gewünschte Federwirkung der Tellerfeder 9 zu unterstützen. Die Ringdichtung 19 besteht aus elastischem Polymermaterial 23, welches entsprechende Bewegungen der Tellerfeder 9 mit der Ringscheibe 8 zuläßt. Die Ringscheibe 8 ist wie in Figur 2 ebenfalls mit einer Oberflächenprofilierung auf der Dichtfläche 18 versehen.

## Patentansprüche

1. Dichtung für die Abdichtung der Lagerung eines Wellenzapfens in einer Gehäusewand, **dadurch gekennzeichnet, daß** die Dichtung (1) aus einer Ringscheibe (8) aus Dichtungsmaterial, einer Tellerfeder (9) mit Halterung (20) und einer Polymerdichtung (23) besteht, wobei die Ringscheibe (8) und die Tellerfeder (9) von einer an der Stirnfläch (10) der Gehäusewand (3) befestigbaren Ringdichtung (19) gehalten sind, so dass im Gebrauch die Ringscheibe (8) an die Stimfläche (11) des Wellenzapfens (4) gedrückt wird, wobei die Ringscheibe (8), die Tellerfeder (9) und deren Halterung (20) über eine Polymerdichtung (23) miteinander verbunden sind und wobei die Ringdichtung (19) aus der Polymerdichtung (23) und der Halterung (20) gebildet ist.

2. Dichtung nach Anspruch 1, **dadurch gekennzeichnet, daß** das Dichtungsmaterial der Ringscheibe (8) PTFE (Polytetrafluorethylen) ist.

3. Dichtung nach Anspruch 1 oder 2, **dadurch gekennzeichnet, daß** die Ringscheibe (8) auf ihrer Dichtfläche (18) eine spiralig verlaufende Oberflächenprofilierung zur Rückförderung von Lecköl hat.

4. Dichtung nach einem der Ansprüche 1 bis 3, **dadurch gekennzeichnet, daß** die Ringdichtung (19) aus einer metallenen Halterung (20) mit anvulkanisierter Polymerdichtung (23) besteht.

5. Dichtung nach einem der Ansprüche 1 bis 4, **dadurch gekennzeichnet, daß** die Halterung (20) und Tellerfeder (9) ein einheitliches Bauteil bilden.

## Claims

1. A seal for sealing the support of a shaft journal in a housing wall, **characterized in that** the seal (1) comprises an annular disc (8) of sealing material, a cup spring (9) with a holder (20) and a polymer seal (23), the annular disc (8) and the cup spring (9) being held by an annular seal (19) which can be fastened to the end face (10) of the housing wall (3), so that during use the annular disc (8) is pressed against the end face (11) of the shaft journal (4), the annular disc (8), the cup spring (9) and its holder (20) being connected to one another by means of the polymer seal (23), and the annular seal (19) being formed by the polymer seal (23) and the holder (20).

2. A seal according to claim 1, **characterized in that** the sealing material of the annular disc (8) is PTFE (polytetrafluoroethylene).

3. A seal according to claim 1 or 2, **characterized in that** the annular disc (8) has on its sealing face (18) a spirally running surface profiling for the return of leakage oil.

4. A seal according to any one of claims 1 to 3, **characterized in that** the annular seal (19) comprises a metal holder (20) with a vulcanized-on polymer seal (23).

5. A seal according to any one of claims 1 to 4, **characterized in that** the holder (20) and the cup spring (9) form a unitary component.

## Revendications

1. Joint pour étanchéité du logement d'un tourillon d'arbre dans une paroi de boîtier, **caractérisé en ce que** le joint (1) se compose d'un disque annulaire (8) en matériau d'étanchéité, d'une rondelle-ressort (9) avec fixation (20) et d'un joint polymère (23), le disque annulaire (8) et la rondelle-ressort (9) étant maintenus par un joint annulaire (19) pouvant être fixé sur la surface frontale (10) de la paroi de boîtier (3), si bien que lors de l'utilisation le disque annulaire (8) est pressé sur la surface frontale (11) du tourillon d'arbre (4), le disque annulaire (8), la rondelle-ressort (9) et leur support (20) étant reliés ensemble au moyen d'un joint polymère (23), et dans lequel le joint annulaire (19) est formé à partir du joint polymère (23) et du support (20).

2. Joint selon la revendication 1, **caractérisé en ce que** le matériau d'étanchéité du disque annulaire (8) est en PTFE (polytétrafluoroéthylène).

3. Joint selon la revendication 1 ou 2, **caractérisé en ce que** le disque annulaire (8) possède sur sa surface d'étanchéité (18) un profil de surface passant en spirale pour refouler l'huile de fuite.

4. Joint selon l'une des revendications 1 à 3, **caractérisé en ce que** le joint annulaire (19) se compose d'une fixation métallique (20) avec un joint polymère grillé (23).

5. Joint selon l'une des revendications 1 à 4, **caractérisé en ce que** la fixation (20) et la rondelle-ressort (9) forment un élément uniforme.
